# EUROPEAN PATENT APPLICATION

(11) **EP 4 650 206 A1**
(43) Date of publication of application: **19.11.2025**
(21) Application number: 23915900.7
(22) Date of filing: 10.01.2023
(51) Int. Cl.: B60K 28/10, F16H 61/18

(54) **FAULTY START SUPPRESSION SYSTEM**

(71) Applicant: AISIN CORPORATION, Kariya-shi, Aichi 448-8650 (JP)
(72) Inventor: OGINO, Atsuto, Kariya-shi, Aichi 448-8650 (JP); YOKOI, Yosuke, Kariya-shi, Aichi 448-8650 (JP)
(74) Representative: TBK
(86) International application number: PCT/JP2023/000320
(87) International publication number: WO 2024/150276

(57) **Abstract**

A shift switching device 2 of a faulty start suppression system 10 is configured to switch a shift position of the shift switching device 2 to parking when a faulty operation determination unit 3 determines that the shift position is different from a shift position intended by a driver 200.

## Description

### Technical Field

This disclosure relates to a faulty start suppression system.

### Background Art

In the related art, a faulty start suppression system has been known. Such a faulty start suppression system is disclosed in, for example, JP2011-201396A.

JP2011-201396A discloses a faulty operation detection device including an intention estimation unit that estimates, based on a behavior of a driver who drives a vehicle, an intention of the driver, and a vehicle state monitoring unit that detects a shift position. Here, the intention of the driver is an intention to drive the vehicle forward or drive the vehicle backward.

The faulty operation detection device in JP2011-201396A includes a faulty operation determination unit and a drive control unit. The faulty operation determination unit is configured to determine whether a shift faulty operation of a shift position is generated based on the intention of the driver that is estimated by the intention estimation unit and the shift position acquired from the vehicle state monitoring unit. The drive control unit is configured to brake the vehicle by applying a brake when the faulty operation determination unit determines that the shift faulty operation is generated.

### Citation List

### Patent Literature

PTL 1: JP2011-201396A

### Summary of Invention

### Technical Problem

However, in the faulty operation detection device disclosed in JP2011-201396A, there is a problem that when the driver makes the shift faulty operation, the vehicle may not be able to be suppressed from starting in a direction unintended by the driver in braking by the brake because a brake oil pressure does not increase to an oil pressure required for applying the brake.

This disclosure has been made to solve the above technical problem, and an object of this disclosure is to provide a faulty start suppression system that can more reliably suppress a vehicle from starting in a direction unintended by a driver.

### Solution to Problem

To achieve the object described above, a faulty start suppression system in an aspect of this disclosure includes: a shift switching device configured to switch a shift position according to forward traveling, backward traveling, or stop of a vehicle; and a faulty operation determination unit configured to determine whether the shift position is different from a shift position intended by a driver who drives the vehicle that is estimated based on a behavior of the driver, in which the shift switching device is configured to switch the shift position of the shift switching device to parking when the faulty operation determination unit determines that the shift position is different from the shift position intended by the driver.

In the faulty start suppression system according to one aspect of this disclosure, as described above, the shift switching device is configured to switch a shift position of the shift switching device to parking when the faulty operation determination unit determines that the shift position is different from the shift position intended by the driver. In this way, by setting the shift position to parking, the vehicle can be stopped without oil pressure in a state of blocking the transmission of the driving force, and therefore it is possible to more reliably suppress the start of the vehicle in a direction unintended by the driver.

In the faulty start suppression system according to the one aspect, the shift switching device is preferably configured to switch the shift position of the shift switching device to parking when the shift position is different from the shift position intended by the driver and a brake is not operated by the driver.

According to such a configuration, when the brake is not operated by the driver, the vehicle can be stopped in a state of blocking the transmission of the driving force, and therefore it is possible to suppress an unintended movement of the vehicle due to failure to operate the brake (for example, the vehicle sliding down a slope).

In this case, the shift switching device is preferably configured to switch the shift position of the shift switching device to parking based on acquisition of a shift switching signal from the faulty operation determination unit that is based on the shift position being different from the shift position intended by the driver and the brake being not operated by the driver.

According to such a configuration, processing of the faulty operation determination is performed in the faulty operation determination unit, and since processing of switching the shift position to parking based on the shift switching signal only needs to be performed in the shift switching device, an increase in processing load in the shift switching device can be suppressed.

In the faulty start suppression system according to the one aspect, the faulty operation determination unit is preferably configured to notify that the shift position is different from the shift position intended by the driver when the shift position is different from the shift position intended by the driver.

According to such a configuration, by notifying that the shift position is different from the shift position intended by the driver, the driver can recognize the shift faulty operation, and therefore it is possible to suppress the vehicle from starting with a shift faulty operation.

In the faulty start suppression system according to the one aspect, the faulty operation determination unit is preferably configured to estimate an intention of the driver based on the behavior of the driver in the vehicle that is based on an image captured by the in-vehicle camera that captures an image of the driver in the vehicle.

According to such a configuration, since it is possible to estimate the shift position intended by the driver based on the actual behavior of the driver captured by the in-vehicle camera, it is possible to more accurately estimate the shift position intended by the driver.

In this case, the behavior of the driver preferably includes an eye line position and an eye line angle of the driver. It is conceivable that a reference of the eye line position and the eye line angle of the driver is, for example, an eye line position and an eye line angle in a state in which the driver is looking at the front (an eye line of the driver when the vehicle travels forward), respectively.

According to such a configuration, since the eye line position and the eye line angle of the driver change in a traveling direction of the vehicle, it is possible to more accurately estimate the shift position intended by the driver.

In the faulty start suppression system including the eye line position and the eye line angle of the driver as the behavior of the driver, a target of the eye line position and the eye line angle of the driver is preferably a rearview mirror.

According to such a configuration, it is possible to estimate the shift position intended by the driver (for example, a shift position for moving the vehicle backward) based on the eye line position and the eye line angle of the driver when looking at the rearview mirror.

In the faulty start suppression system including the eye line position and the eye line angle of the driver as the behavior of the driver, a target of the eye line position and the eye line angle of the driver is preferably a front direction.

According to such a configuration, it is possible to estimate the shift position intended by the driver (for example, a shift position for moving the vehicle forward) based on the eye line position and the eye line angle of the driver when looking at the front of the vehicle.

### Brief Description of Drawings

[FIG. 1] FIG. 1 is a block diagram schematically showing a configuration of the entire system including a faulty start suppression system according to a first embodiment.
[FIG. 2] FIG. 2 is a diagram showing a structure of a detent plate including four valley portions of a transmission device.
[FIG. 3] FIG. 3 is a diagram showing a state in which a vehicle equipped with the faulty start suppression system according to the first embodiment starts on a slope.
[FIG. 4] FIG. 4 is a diagram showing a state in which the vehicle equipped with the faulty start suppression system according to the first embodiment is about to move backward to enter a garage.
[FIG. 5] FIG. 5 shows a flowchart of faulty start suppression processing of the faulty start suppression system according to the first embodiment.
[FIG. 6] FIG. 6 is a block diagram schematically showing a configuration of the entire system including a faulty start suppression system according to a second embodiment.
[FIG. 7] FIG. 7 is a block diagram schematically showing a configuration of the entire system including a faulty start suppression system according to a third embodiment.

### Description of Embodiments

Hereinafter, embodiments disclosed here will be described with reference to the drawings.

### [First Embodiment]

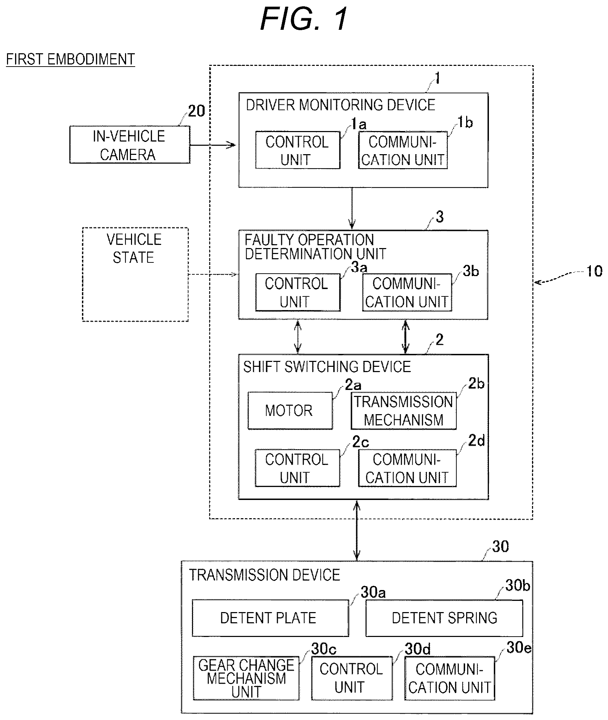

A configuration of a faulty start suppression system 10 will be described with reference to FIGS. 1 to 4. The faulty start suppression system 10 is a system for suppressing a faulty start of a vehicle 100 including an engine, such as a gasoline vehicle.

As shown in FIG. 1, the faulty start suppression system 10 includes a driver monitoring device 1, a shift switching device 2, and a faulty operation determination unit 3.

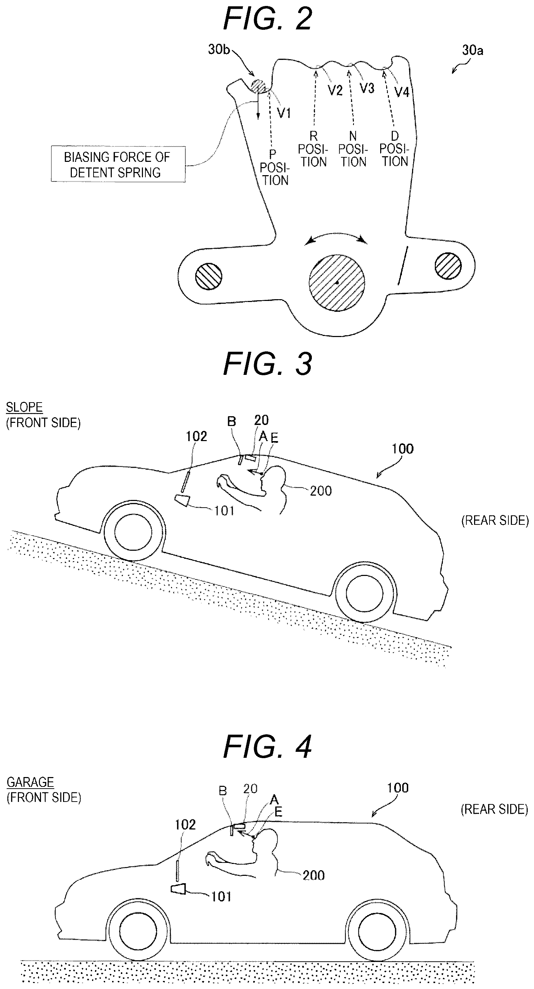

The driver monitoring device 1 is configured to acquire a behavior of a driver 200 based on an image captured by an in-vehicle camera 20. Here, the behavior of the driver 200 includes an eye line position E (see FIG. 3 and FIG. 4) and an eye line angle A (see FIG. 3 and FIG. 4) of the driver 200. The eye line position E is, for example, a position of eyes of the driver 200 acquired with the eye line position E in a state in which the driver 200 is looking at the front (an eye line of the driver 200 when the vehicle 100 travels forward) as a reference. The eye line angle A is, for example, an angle of an eye line of the driver 200 acquired with the eye line position E in the state in which the driver 200 is looking at the front (the eye line of the driver 200 when the vehicle 100 travels forward) as a reference.

Specifically, the driver monitoring device 1 includes a control unit 1a and a communication unit 1b. The control unit 1a is an erectronic control unit (ECU). The control unit 1a includes a central processing unit (CPU) and a storage unit including memories such as a read only memory (ROM) and a random access memory (RAM). The communication unit 1b is configured to perform communication with other devices via a network. The communication unit 1b is configured to be able to communicate with other devices via a local interconnect network (LIN) or a controller area network (CAN). The communication unit 1b can communicate with the in-vehicle camera 20 and the faulty operation determination unit 3.

The shift switching device 2 is configured to be able to switch shift positions according to forward traveling, backward traveling, or stop of the vehicle 100. Such a shift switching device 2 is a shift-by-wire (SBW) that performs electrical shift switching control on a transmission device 30 when the driver 200 performs a shift switching operation via an operation unit such as a shift switch (or a shift lever). In the shift switching device 2, the transmission device 30 is switched to any shift position of a P (parking) position, an R (reverse) position, an N (neutral) position, and a D (drive) position corresponding to shift operations of the driver 200.

The shift switching device 2 includes a motor 2a, a transmission mechanism 2b, a control unit 2c, and a communication unit 2d.

The motor 2a is a motor for driving a detent plate 30a (see FIG. 2) to be described later. The motor 2a is a three-phase motor of a surface permanent magnet (SPM) in which a permanent magnet is incorporated into a surface of a rotor. The transmission mechanism 2b is configured to transmit a driving force of the motor 2a to the detent plate 30a. The transmission mechanism 2b includes a reduction mechanism (not shown) and an output shaft (not shown).

The control unit 2c includes a CPU and a storage unit including memories such as an ROM and an RAM. The communication unit 2d is configured to perform communication with other devices via a network. The communication unit 2d is configured to be able to communicate with other devices via an LIN or a CAN. The communication unit 2d can communicate with the faulty operation determination unit 3 and the transmission device 30.

The transmission device 30 is implemented by an automatic gear change switching mechanism (auto-transmission). The transmission device 30 includes the detent plate 30a, a detent spring 30b, a gear change mechanism unit 30c, a control unit 30d, and a communication unit 30e.

As shown in FIG. 2, the detent plate 30a includes a plurality of (four) valley portions (a plurality of valley portions) including a valley portion V1, a valley portion V2, a valley portion V3, and a valley portion V4 provided to correspond to the shift positions (the P position, the R position, the N position, and the D position). The detent spring 30b is configured to hold the detent plate 30a at rotation angle positions corresponding to the P position, the R position, the N position, and the D position, respectively. The gear change mechanism unit 30c is a mechanism for shifting to gears corresponding to the P position, the R position, the N position, and the D position, respectively.

As shown in FIG. 1, the control unit 30d includes a CPU and a storage unit including memories such as an ROM and an RAM. The communication unit 30e is configured to perform communication with other devices via a network. The communication unit 30e is configured to be able to communicate with other devices via an LIN or a CAN. The shift switching device 2 is configured to acquire the shift position of the gear change mechanism unit 30c via the communication unit 2d. The shift switching device 2 is configured to transmit a signal for switching the gear change mechanism unit 30c to the shift position acquired from a shift switch to the transmission device 30 via the communication unit 2d.

The faulty operation determination unit 3 is configured to determine a faulty operation of the driver 200. That is, the faulty operation determination unit 3 is configured to determine whether the shift position is different from a shift position intended by the driver 200 estimated based on the behavior of the driver 200 who drives the vehicle 100.

Specifically, the faulty operation determination unit 3 includes a control unit 3a and a communication unit 3b. The control unit 3a includes a CPU and a storage unit including memories such as an ROM and an RAM. The communication unit 3b is configured to be able to communicate with other devices via an LIN or a CAN. The communication unit 3b can communicate with the driver monitoring device 1 and the shift switching device 2. Accordingly, the faulty operation determination unit 3 can acquire the behavior of the driver 200 from the driver monitoring device 1. The faulty operation determination unit 3 can acquire the shift position of the gear change mechanism unit 30c from the shift switching device 2.

The faulty operation determination unit 3 is configured to estimate the shift position intended by the driver 200 based on the behavior of the driver 200 in the vehicle 100 that is based on an image captured by the in-vehicle camera 20 that captures an image of the driver 200 in the vehicle 100. Specifically, the faulty operation determination unit 3 is configured to estimate the shift position intended by the driver 200 based on the eye line position E and the eye line angle A of the driver 200.

Here, the shift position intended by the driver 200 is the D position when the vehicle 100 is moved forward, and is the R position when the vehicle 100 is moved backward. That is, the faulty operation determination unit 3 is configured to estimate the shift position intended by the driver 200 as the D position when the driver 200 moves the vehicle 100 forward. The faulty operation determination unit 3 is configured to estimate the shift position intended by the driver 200 as the R position when the driver 200 moves the vehicle 100 backward. Hereinafter, a method for determining the shift position intended by the driver 200 will be exemplified.

For example, when moving the vehicle 100 forward, the driver 200 faces forward. That is, a target of the eye line position E and the eye line angle A of the driver 200 is a front direction of the vehicle 100 (a direction in which the vehicle 100 travels forward). Therefore, for example, it is conceivable that the eye line position E is determined to be a reference position when the eye line position E in the state in which the driver 200 is looking at the front (the eye line of the driver 200 when the vehicle 100 travels forward) is used as a reference. For example, it is conceivable that the eye line angle A is determined to be approximately 0 degrees when the eye line angle A in the state in which the driver 200 is looking at the front (the eye line of the driver 200 when the vehicle 100 travels forward) is used as a reference. Accordingly, it is conceivable that the faulty operation determination unit 3 determines that the shift position intended by the driver 200 is the D position. In this case, the driver 200 aims to move the vehicle 100 forward as described above.

When moving the vehicle 100 backward, it is conceivable that the driver 200 may visually check a rearview mirror B. That is, the target of eye line position E and the eye line angle A of the driver 200 is the rearview mirror B. In this case, for example, it is conceivable that the eye line position E is determined to be an upper position when the eye line position E in the state in which the driver 200 is looking at the front (the eye line of the driver 200 when the vehicle 100 travels forward) is used as a reference. For example, it is conceivable that the eye line angle A is determined to be approximately 20 degrees when the eye line position E in the state in which the driver 200 is looking at the front (the eye line of the driver 200 when the vehicle 100 travels forward) is used as a reference. Accordingly, it is conceivable that the faulty operation determination unit 3 determines that the shift position intended by the driver 200 is the R position. In this case, the driver 200 aims to move the vehicle 100 backward as described above.

The faulty operation determination unit 3 is configured to be able to acquire, as a vehicle state, a brake operation signal from a brake device, an erectromechanical parking brake (EPB), and electronic stability control (ESC). The brake operation signal is a signal indicating whether a brake is operated by the driver 200.

### (Faulty Start Suppression Control)

In the faulty start suppression system 10 of a first embodiment, to suppress faulty start, when the faulty operation determination unit 3 determines that a faulty operation by the driver 200 is generated, a driving force transmission mechanism of the vehicle 100 is locked (fixed) by switching the shift position to the P position by the shift switching device 2. That is, the shift switching device 2 is configured to switch the shift position of the shift switching device 2 to the P (parking) position when the shift position is different from the shift position intended by the driver 200 and the brake is not operated by the driver 200.

Specifically, the shift switching device 2 is configured to switch the shift position of the shift switching device 2 to the P (parking) position based on acquisition of a shift switching signal from the faulty operation determination unit 3 that is based on the shift position being different from the shift position intended by the driver 200 and the brake being not operated by the driver 200. Here, the shift position can be acquired from the shift switching device 2 in the faulty operation determination unit 3 as described above. As described above, the shift position intended by the driver 200 can be estimated by the faulty operation determination unit 3 based on the eye line position E and the eye line angle A. A brake operation by the driver 200 can be determined by the faulty operation determination unit 3 based on the brake operation signal.

The faulty operation determination unit 3 is configured to notify that the shift position is different from the shift position intended by the driver 200 when the shift position is different from the shift position intended by the driver 200 before transmitting the shift switching signal to the shift switching device 2. Specifically, the faulty operation determination unit 3 is configured to notify the driver 200, by voice using a speaker 101, that the shift position is different from the shift position intended by the driver 200 when the shift position is different from the shift position intended by the driver 200. In addition, the faulty operation determination unit 3 is configured to visually notify the driver 200, by using a monitor 102, that the shift position is different from the shift position intended by the driver 200 when the shift position is different from the shift position intended by the driver 200.

Such faulty start suppression control is ended when the shift switching device 2 switches the shift position to the P position based on the shift switching signal from the faulty operation determination unit 3 and then the driver 200 performs the shift operation to another shift position other than the P position. Then, after the faulty start suppression control is ended, the vehicle 100 starts at the shift position subjected to the shift operation by the driver 200.

### (Situation in which Faulty Start Suppression Control is Performed)

Hereinafter, the faulty start suppression control will be described based on a specific situation.

### <First Situation>

A first situation shown in FIG. 3 indicates a case in which the vehicle 100 is stopped on a slope, the shift position is subjected to the shift operation to the P position, and the vehicle 100 is about to start. In the vehicle 100, it is recognized that the vehicle 100 is located on a slope based on an inclination angle sensor, a global positioning system (GPS), and the like.

In this case, since the vehicle is about to move forward, for example, the eye line position E of the driver 200 is located at the reference position, and the eye line angle A is approximately 0°. Here, the driver 200 erroneously performs the shift operation to the R position instead of the D position. Then, when the driver 200 takes a foot off the brake to start the vehicle, the faulty start suppression control is performed.

That is, to notify that the shift position is different from the shift position intended by the driver 200, the faulty operation determination unit 3 is configured to transmit a signal for causing the speaker 101 to output a voice and to transmit a signal for causing the monitor 102 to output an image. The faulty operation determination unit 3 is configured to transmit the shift switching signal to the shift switching device 2 based on the shift position being different from the shift position intended by the driver 200 and the driver 200 releasing the foot from the brake. Then, the shift switching device 2 is configured to switch the shift position to the P position based on the acquisition of the shift switching signal.

### <Second Situation>

A second situation shown in FIG. 4 indicates a case in which the vehicle 100 is moved backward to enter a garage after the vehicle 100 is stopped. In the vehicle 100, it is recognized that the vehicle 100 is located in a parking lot based on GPS or the like.

In this case, since the vehicle is about to move backward, for example, the eye line position E is located on the upper side, and the eye line angle A is approximately 20 degrees when the driver 200 is looking at the rearview mirror B. Here, the driver 200 erroneously performs the shift operation to the D position instead of the R position. Then, when the driver 200 takes the foot off the brake to start the vehicle, the faulty start suppression control is performed.

That is, to notify that the shift position is different from the shift position intended by the driver 200, the faulty operation determination unit 3 is configured to transmit a signal for causing the speaker 101 to output a voice and to transmit a signal for causing the monitor 102 to output an image. The faulty operation determination unit 3 is configured to transmit the shift switching signal to the shift switching device 2 based on the shift position being different from the shift position intended by the driver 200 and the driver 200 releasing the foot from the brake. Then, the shift switching device 2 is configured to switch the shift position to the P position based on the acquisition of the shift switching signal.

### (Faulty Start Suppression Processing)

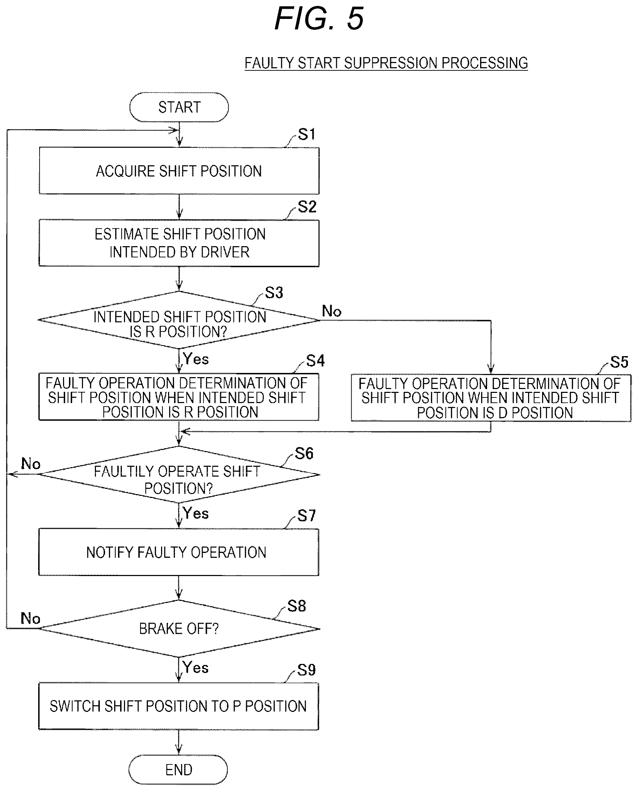

Faulty start suppression processing will be described below with reference to FIG. 5. The faulty start suppression processing is performed by the control unit 3a of the faulty operation determination unit 3.

In step S1, the shift position is acquired from the shift switching device 2. In step S2, the shift position intended by the driver 200 is estimated based on the eye line position E and the eye line angle A of the driver 200 which are acquired from the driver monitoring device 1. In step S3, it is determined whether the shift position intended by the driver 200 is the R position. If the shift position intended by the driver 200 is the R position, the processing proceeds to step S4, and if the shift position intended by the driver 200 is not the R position (is the D position), the processing proceeds to step S5.

In step S4, faulty operation determination of the shift position when the intended shift position is the R position is performed. That is, the faulty operation determination when the intended shift position is the R position is performed based on the estimated shift position intended by the driver 200 and the acquired shift position. Here, when the shift position is the D position, it is determined that a faulty operation is generated. In step S5, faulty operation determination of the shift position when the intended shift position is the D position is performed. That is, the faulty operation determination of the shift position when the intended shift position is the D position is performed based on the estimated shift position intended by the driver 200 and the acquired shift position. Here, when the shift position is the R position, it is determined that a faulty operation is generated.

In step S6, it is determined whether the shift position is a faulty operation. If it is determined in step S4 or step S5 that the shift position is a faulty operation, the processing proceeds to step S7, and if it is determined in step S4 or step S5 that the shift position is not a faulty operation, the processing returns to step S1.

In step S7, the faulty operation of the shift position is notified. That is, based on the shift position being subjected to a faulty operation, the speaker 101 or the monitor 102 is used to notify the driver 200 that the shift position is a faulty operation.

In step S8, it is determined whether the brake is off. That is, it is determined whether the brake operation is being performed by the driver 200. If the brake is off, the processing proceeds to step S9, and if the brake is on, the processing returns to step S1. After the shift position is switched to the P position in step S9, the faulty start suppression processing ends.

### (Effects of First Embodiment)

In the first embodiment, the following effects can be obtained.

In the first embodiment, as described above, the shift switching device 2 is configured to switch the shift position of the shift switching device 2 to the P position when the faulty operation determination unit 3 determines that the shift position is different from the shift position intended by the driver 200. In this way, by setting the shift position to the P position, the vehicle 100 can be stopped without oil pressure in a state of blocking the transmission of the driving force, and therefore it is possible to more reliably suppress the start of the vehicle 100 in a direction unintended by the driver 200.

In the first embodiment, as described above, the shift switching device 2 is configured to switch the shift position of the shift switching device 2 to the P position when the shift position is different from the shift position intended by the driver 200 and the brake is not operated by the driver 200. Accordingly, when the brake is not operated by the driver 200, the vehicle 100 can be stopped in a state of blocking the transmission of the driving force, and therefore it is possible to suppress an unintended movement of the vehicle 100 due to failure to operate the brake (for example, the vehicle 100 sliding down a slope).

In the first embodiment, as described above, the shift switching device 2 is configured to switch the shift position of the shift switching device 2 to the P position based on acquisition of a shift switching signal from the faulty operation determination unit 3 that is based on the shift position being different from the shift position intended by the driver 200 and the brake being not operated by the driver 200. Accordingly, processing of the faulty operation determination is performed in the faulty operation determination unit 3, and since processing of switching the shift position to the P position based on the shift switching signal only needs to be performed in the shift switching device 2, an increase in processing load in the shift switching device 2 can be suppressed.

In the first embodiment, as described above, the faulty operation determination unit 3 is configured to notify that the shift position is different from the shift position intended by the driver 200 when the shift position is different from the shift position intended by the driver 200. Accordingly, by notifying that the shift position is different from the shift position intended by the driver 200, the driver 200 can recognize the shift faulty operation, and therefore it is possible to suppress the vehicle from starting with a shift faulty operation.

In the first embodiment, as described above, the faulty operation determination unit 3 is configured to estimate the shift position intended by the driver 200 based on the behavior of the driver 200 in the vehicle 100 that is based on an image captured by the in-vehicle camera 20 that captures an image of the driver 200 in the vehicle 100. Accordingly, since the shift position intended by the driver 200 can be estimated based on the actual behavior of the driver 200 captured by the in-vehicle camera 20, it is possible to more accurately estimate the shift position intended by the driver 200.

In the first embodiment, as described above, the behavior of the driver 200 includes the eye line position E and the eye line angle A of the driver 200. Accordingly, since the eye line position E and the eye line angle A of the driver 200 change in a traveling direction of the vehicle 100, it is possible to more accurately estimate the intention of the driver 200.

In the first embodiment, as described above, a target of the eye line position E and the eye line angle A of the driver 200 is the rearview mirror B. Accordingly, it is possible to estimate the shift position intended by the driver 200 (for example, a shift position for moving the vehicle backward) based on the eye line position E and the eye line angle A of the driver 200 when looking at the rearview mirror B.

In the first embodiment, as described above, a target of the eye line position E and the eye line angle A of the driver 200 is a front direction (a direction in which the vehicle 100 travels forward). Accordingly, it is possible to estimate the shift position intended by the driver 200 (for example, a shift position for moving the vehicle 100 forward) based on the eye line position E and the eye line angle A of the driver 200 when looking at the front of the vehicle 100.

### [Second Embodiment]

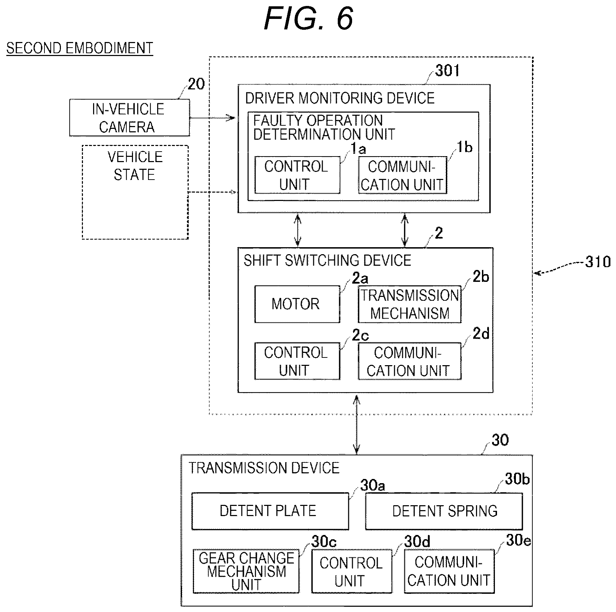

Next, a faulty start suppression system 310 according to a second embodiment will be described with reference to FIG. 6. Specifically, unlike the faulty start suppression system 10 of the first embodiment including the faulty operation determination unit 3 provided separately from the driver monitoring device 1, in the faulty start suppression system 310 of the second embodiment, the driver monitoring device 1 has a function of the faulty operation determination unit 3 of the first embodiment. In the second embodiment, components similar to those of the first embodiment are denoted by the same reference numerals, and description thereof is omitted.

A configuration of the faulty start suppression system 310 will be described with reference to FIG. 6.

The faulty start suppression system 310 includes a driver monitoring device 301 and the shift switching device 2.

The driver monitoring device 1 has the function of the faulty operation determination unit 3 of the first embodiment. Here, the function of the faulty operation determination unit 3 of the first embodiment is a function of determining a faulty operation of the driver 200. That is, the function of the faulty operation determination unit 3 of the first embodiment is a function of determining whether a shift position is different from a shift position intended by the driver 200 estimated based on a behavior of the driver 200 who drives the vehicle 100. Other configurations of the second embodiment are the same as the configurations of the first embodiment, and therefore description thereof is omitted.

### (Effects of Second Embodiment)

In the second embodiment, the following effects can be obtained.

In the second embodiment, as described above, the shift switching device 2 is configured to switch the shift position of the shift switching device 2 to the P position when the faulty operation determination unit 3 determines that the shift position is different from the shift position intended by the driver 200. Accordingly, it is possible to more reliably suppress the start of the vehicle 100 in a direction unintended by the driver 200. Other effects of the second embodiment are the same as the effects of the first embodiment, and therefore description thereof is omitted.

### [Third Embodiment]

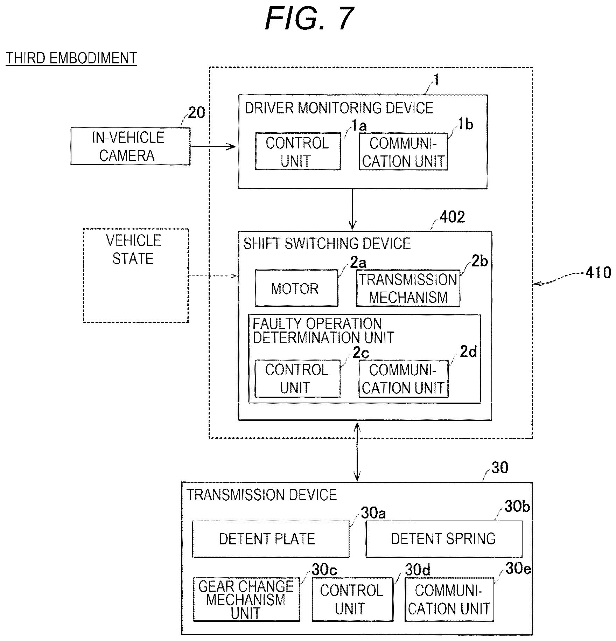

Next, a faulty start suppression system 410 according to a third embodiment will be described with reference to FIG. 7. Specifically, unlike the faulty start suppression system 10 of the first embodiment including the faulty operation determination unit 3 provided separately from the shift switching device 2, in the faulty start suppression system 410 of the third embodiment, a shift switching device 402 has a function of the faulty operation determination unit 3 of the first embodiment. In the third embodiment, components similar to those of the first embodiment are denoted by the same reference numerals, and description thereof is omitted.

A configuration of the faulty start suppression system 410 will be described with reference to FIG. 7.

The faulty start suppression system 410 includes the driver monitoring device 1 and the shift switching device 402.

The shift switching device 402 has the function of the faulty operation determination unit 3 of the first embodiment. Here, the function of the faulty operation determination unit 3 of the first embodiment is a function of determining a faulty operation of the driver 200. That is, the function of the faulty operation determination unit 3 of the first embodiment is a function of determining whether a shift position is different from a shift position intended by the driver 200 estimated based on a behavior of the driver 200 who drives the vehicle 100. Other configurations of the third embodiment are the same as the configurations of the first embodiment, and therefore description thereof is omitted.

### (Effects of Third Embodiment)

In the third embodiment, the following effects can be obtained.

In the third embodiment, as described above, the shift switching device 402 is configured to switch the shift position of the shift switching device 402 to the P position when the faulty operation determination unit 3 determines that the shift position is different from the shift position intended by the driver 200. Accordingly, it is possible to more reliably suppress the start of the vehicle 100 in a direction unintended by the driver 200. Other effects of the third embodiment are the same as the effects of the first embodiment, and therefore description thereof is omitted.

### [Modifications]

The embodiments disclosed herein should be considered to be illustrative and not restrictive in all respects. The scope of this disclosure is indicated not by the description of the embodiments but by the claims, and includes all changes (modifications) within the meaning and scope equivalent to the claims.

For example, in the first to third embodiments, an example is described in which the shift switching device 2 (402) is configured to switch the shift position of the shift switching device 2 (402) to the P position (parking) when the shift position is different from the shift position intended by the driver 200 and the brake is not operated by the driver 200. However, this disclosure is not limited thereto. In the present disclosure, the shift switching device may be configured to switch the shift position of the shift switching device to parking when the shift position is different from the shift position intended by the driver.

In the first to third embodiments, an example is described in which the faulty operation determination unit 3 is configured to notify that the shift position is different from the shift position intended by the driver 200 when the shift position is different from the shift position intended by the driver 200. However, this disclosure is not limited thereto. In the present disclosure, the faulty operation determination unit may not notify that the shift position is different from the shift position intended by the driver when the shift position is different from the shift position intended by the driver.

In the first to third embodiments, an example is described in which the faulty operation determination unit 3 is configured to estimate the shift position intended by the driver 200 based on the behavior of the driver 200 in the vehicle 100 that is based on an image captured by the in-vehicle camera 20 that captures an image of the driver 200 in the vehicle 100. However, this disclosure is not limited thereto. In this disclosure, the faulty operation determination unit may be configured to estimate the shift position intended by the driver based on a behavior of the driver in the vehicle acquired from a device other than an in-vehicle camera.

In the first embodiment, for convenience of description, an example is described in which control processing of the control unit 3a is described using a flowchart of a flow driving type in which processing is performed in order along a processing flow. However, this disclosure is not limited thereto. In this disclosure, the control processing of the control unit may be performed by processing of event-driven type in which processing is performed in units of events. In this case, a complete event-driven type may be performed, or event-driven and flow-driven may be combined and performed.

### Reference Signs List

2, 402: shift switching device
3: faulty operation determination unit
10, 310, 410: faulty start suppression system
20: in-vehicle camera
100: vehicle
200: driver
A: eye line angle
B: rearview mirror
E: eye line position

## Claims

1. A faulty start suppression system comprising:
a shift switching device configured to switch a shift position according to forward traveling, backward traveling, or stop of a vehicle; and
a faulty operation determination unit configured to determine whether the shift position is different from a shift position intended by a driver who drives the vehicle that is estimated based on a behavior of the driver, wherein
the shift switching device is configured to switch the shift position of the shift switching device to parking when the faulty operation determination unit determines that the shift position is different from the shift position intended by the driver.

2. The faulty start suppression system according to claim 1, wherein
the shift switching device is configured to switch the shift position of the shift switching device to parking when the shift position is different from the shift position intended by the driver and a brake is not operated by the driver.

3. The faulty start suppression system according to claim 2, wherein
the shift switching device is configured to switch the shift position of the shift switching device to parking based on acquisition of a shift switching signal from the faulty operation determination unit that is based on the shift position being different from the shift position intended by the driver and the brake being not operated by the driver.

4. The faulty start suppression system according to any one of claims 1 to 3, wherein
the faulty operation determination unit is configured to notify that the shift position is different from the shift position intended by the driver when the shift position is different from the shift position intended by the driver.

5. The faulty start suppression system according to any one of claims 1 to 4, wherein
the faulty operation determination unit is configured to estimate a shift position intended by the driver based on a behavior of the driver in the vehicle that is based on an image captured by an in-vehicle camera configured to capture an image of the driver in the vehicle.

6. The faulty start suppression system according to claim 5, wherein
the behavior of the driver includes an eye line position and an eye line angle of the driver.

7. The faulty start suppression system according to claim 6, wherein
a target of the eye line position and the eye line angle of the driver is a rearview mirror.

8. The faulty start suppression system according to claim 6, wherein
a target of the eye line position and eye line angle of the driver is a front direction.
